# EUROPEAN PATENT APPLICATION

(11) **EP 2 709 333 A1**
(43) Date of publication of application: **19.03.2014**
(21) Application number: 12382363.5
(22) Date of filing: 18.09.2012
(51) Int. Cl.: H04L 29/06, G06F 21/62

(54) **Method and devices for data leak protection**

(71) Applicant: Alcatel Lucent, 75007 Paris (FR)
(72) Inventor: Garcia Aranda, Jose Javier, Alcorcón (ES)
(74) Representative: Carpintero Lopez, Francisco

(57) **Abstract**

Method and devices for protection of sensitive electronic data in scenarios where authorized users with granted access to information are not trusted users. In these scenarios protection based in secret passwords or digital certificates, intrusions prevention systems, authentication... are considered low level protections because the user who is granted access to information could potentially share these credentials with malicious users or credentials may be stolen by malicious users. The solutions disclosed in the proposed embodiments can be implemented by small companies or non-corporative users (home users) without any installation or amendments in the IT infrastructure. Moreover, said proposed solutions are intuitive and easily usable with different environments

## Description

### BACKGROUND OF THE INVENTION

### Technical field

The present invention relates to the improvement of data protection and more particularly specifically to a method and devices for data leak protection.

### Description of related art

In corporate and government computers systems and networks, a lot of sensitive data is travelling to be exchanged and/or used by different entities or users. Data theft, as well as data alteration, makes every day more difficult to assure data protection of files. Moreover, data files today are easily copied and transmitted widely throughout the world in a largely uncontrolled and nearly instantaneous way. Multiple computers connected through a variety of local and global networks can share information through the copying and electronic delivery of files. Further, a variety of tools have been developed to facilitate file sharing and file transmission and distribution.

To stop the onslaught of threats to corporate and government networks, a host of software and appliances are being deployed and used daily. Company computer systems are protected by complex and expensive layers of security (Intrusions prevention systems as firewalls, encryption, authentication, digital certificates, passwords, digital rights management DRM, Enterprise Right Management ERM... ) to avoid external data attacks and generally speaking to avoid that unauthorized users access the data. For example, some applications such as WinZip® can allow a user to create executable compressed files for embedding his data and to associate a password to said files, so that another entity will have to enter said password to extract the data from said files.

But said mechanisms are useless when the data leaks come from internal authorized users. So what happen when users with granted access to the information are not trusted users and they share the information with other dangerous people out of the organization?.

So far, to address said data leak problem, organizations use to focus on content filtering and blocking of electronic communications leaving the network (not just email, but other types of electronic communications as instant messaging (IM), webmail, HTTP, FTP communications as well). Electronic communication are policed to prevent intellectual property, financial information, patient information, personal credit card data and a variety of sensitive information (depending on the business and the industry) from falling into the wrong hands.

However, these type of solutions are not good enough. There is always the posibility to copy the sensitive information in a storage device (such as a pendrive or any other type of storage device) and deliver it to the wrong hands (the increasing capacity and reduced price of storage devices encourages this activity). Or even this sensitive information can be sent by email from home, without passing through security company checkings.

Furthermore, the existing applications are nevertheless very limited, as they do not allow a user to define customized privacy policies to specify how and under what conditions the data should be extracted. And most of the solutions disclosed in the prior art are client-server based solutions which must be integrated into company infrastructure and they need an overall security architecture (a trusted server, a security server...). Some of said solutions as well, require the presence of an external module, such as a plug-in module, for checking and applying the privacy policies.

Hence, there is a strong and pressing need for a complete, easy to implement and to install and efficient solution to the protection of sensitive information in this scenario, when the users with granted access to the information are not trusted users (or they could be easily impersonated by a not granted user) and therefore data leaks can be produced.

The embodiments of the invention stated below offer said complete solution to the protection of sensitive information in this type of scenario; said solution being intuitive and easily usable with different environments. Moreover it is not mandatory to have any client-server infrastructure or any external network communication.

### SUMMARY

These and other problems are generally solved or circumvented, and technical advantages are generally achieved, by example embodiments of the present invention.

According to a first aspect of the invention, a method is provided for protection of electronic data, the method comprising the following steps:
a) A first user of a first electronic device selecting verifications to be performed from a list of available verifications
b) Encrypting the electronic data in the first electronic device.
c) Creating a file in said first electronic device, embedding said encrypted data in said file and including in said file information identifying the verifications selected.
d) Opening the file in a second electronic device by a second user.
e) In the second electronic device, extracting from the file, information identifying the verifications selected and performing the selected verifications one by one.
f) If all the selected verifications are successful, extracting from the file the encrypted data, decrypting the data and storing them in a volatile memory.
g) Blocking in the second electronic device certain functions applicable to the decrypted data.

In an embodiment, said functions may be blocked at least til the file is closed. In an embodiment, said functions are functions which allow the second user to share data with other users. Said functions blocked are at least the following functions: the Copy&Paste function, the cut&paste function, the saving the file in storage devices function, the screen capture function and the print function.

The "information identifying the selected verifications" can be for example, the name of the verifications or any identification or ID of the selected verifications.

The first and second electronic device may be the same electronic device or different electronic devices. In an embodiment, said devices are electronic programmable devices.

In an embodiment the list of available verifications to be performed includes at least the following verifications: verify that the user opening the file is logged in a domain which belongs to a list of allowed domains, verify that the second electronic device fingerprint (that is the electronic device hardware and the software installed in said electronic device) belongs to a list of allowed fingerprints, verify that biometrical features of the user opening the file belong to a list of allowed biometrical features, verify that the date and time when the file is opened is within a certain allowed period for accessing the file, verify that the location of the second electronic device belongs to a list of allowed locations, verify that the answers to some questions are correct according to a list of correct answers.

The list of allowed values for each selected verification (that is, list of allowed domains, the list of allowed fingerprints, the list of allowed biometrical features, the list of allowed locations, the allowed periods and the list of correct answers) may be defined by the file creator (the first user) and may be further included in the file in step c) or may be stored in a third electronic device. In this latter case, the ID of said third electronic device should be included in the file in step c).

That the verification is successful (or that the verifications have been successfully verified) means that the verification has been performed (carried out) and that the result of the verification is positive (that is, the verified values belong to a predefined list of allowed values).

In an embodiment, if any of the selected verifications is not successful, the file is closed and the process is ended. Optionally, an alarm of "not allowed access" can be activated in the second electronic device.

In an embodiment, step a) further includes the action of defining for each selected verification which part of the electronic data will not be accessible if said challenge is not successfully verified (validated); step c) further includes the action of including in said file for each selected verification which part of the electronic data will not be accessible if said challenge is not successfully validated and step f) further includes the actions of: if any of the selected verifications is not successful, obtaining for each not successful verification which part of the certain electronic data will be defined as not accessible, extracting from the file the parts of the encrypted data which has not been defined as not accessible, decrypting said parts and storing them in a volatile memory where the second user can access the decrypted data.

In an embodiment, step c) further includes the action of including in the file an ID of a third electronic device where the second electronic device has to connect to verify if some of the selected verifications are valid, and in the step e) the action of performing the selected verifications one by one includes: connecting to said third electronic device to perform the selected verifications. Said third electronic device may be the same as the first electronic device or a different electronic device.

In an embodiment, the volatile memory is a RAM memory.

In an embodiment, the actions defined in steps e), f) and g) are performed by the second electronic device by executing executable instructions (e.g. an executable code) previously obtained. That is, executable instructions which makes the electronic device opening the file (when it runs said instructions) to verify the selected challenges, to decrypt and to store the deciphered data in a volatile memory if the verifications are successful and to block the "dangerous" sharing functions.

Said executable instructions may be previously stored in the second electronic device or may be embedded in the file in step c) and said executable instructions are extracted from the file by the second electronic device.

According to a second aspect of the invention, an electronic device is provided for protecting electronic data, the electronic device comprising:
- Means for selecting by a first user of the electronic device, verifications to be performed from a list of possible verifications.
- Means for encrypting the electronic data
- Means for creating a file in said first electronic device containing said encrypted data and including in said file information identifying the verifications selected

Said electronic device may further include means for including in said file, executable instructions which, when executed by a second electronic device, makes the second electronic device to extract from the file information identifying selected verifications to be performed, to perform the verifications selected and if all the selected verifications are successful, extracting from the file the encrypted data, decrypting the data and storing it in a volatile memory and to block some functions applicable to the electronic data while the file is opened.

According to a third aspect of the invention, an electronic device is provided for accessing electronic data contained in a file, the electronic device comprising:
- Means for extracting from the file information identifying selected verifications to be performed
- Means for performing the selected verifications one by one.
- Means for, if all the selected verifications are successful, extracting from the file the encrypted data, decrypting the data and storing it in a volatile memory where an user of the electronic device can access the decrypted data.
- Means for blocking in the second electronic device certain functions while the file is opened.

According to another aspect of the invention, a computer program product is provided, comprising instructions causing a computer executing the program, to perform all steps of any of the methods previously disclosed and a digital data storage medium is also provided storing said computer program.

Consequently, according to the invention, a method devices and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method and devices in accordance with embodiments of the present invention are now described, by way of example only, and with reference to the accompanying drawings, in which:

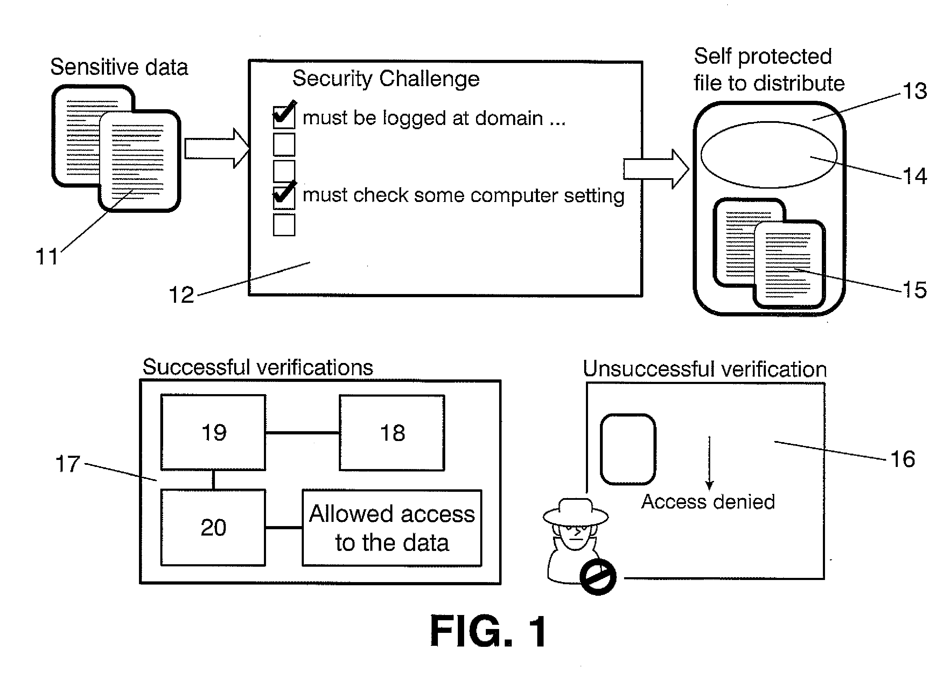

Figure 1 shows a schematic diagram of the proposed solution according to one embodiment of the invention.

Throughout the figures like reference numerals refer to like elements.

### DESCRIPTION OF EMBODIMENTS

The present inventions may be embodied in other specific devices, systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

The following embodiments solves some of the problems found in the prior art data protection techniques, proposing a new method which uses a new protection concept for protection of sensitive data. Said data may be text, audio, video or any type of data.

As explained before, most of the prior art techniques are very useful to avoid the access to information to not authorized (granted) users but they are almost useless to avoid data leaks which come from authorized users (or from somebody impersonating an authorized user). In the following embodiments, it is considered that a user with granted access to information is not a trusted user. Under this perspective, protections based in secret passwords or digital certificates, intrusions prevention systems, authentication... are considered low level protections because the user who is granted access to information could potentially share these credentials with malicious users).

Most of the solutions disclosed in the prior art are client-server based solutions which must be integrated into company infrastructure. The solutions proposed by the following embodiments do not need any client-server infrastructure or any external network communication as it may be supported only by the protected file itself. It allows therefore to be implemented by small companies or non-corporative users (home users) without any installation or amendments in the IT infrastructure. Moreover, said proposed solution is intuitive and easily usable with different environments

Most of the solutions proposed in the prior art offer a set of predefined security layers. As it will be explained later, in the following embodiments, the security may be selected by the user, making it very strong or very soft, depending on the preference of the user protecting the data; even some of the security options could be created and customized by the user protecting the data.

In an exemplary embodiment of the invention, when a file, called source file (a word document, an excel file, etc or any other type of file containing data) contains sensitive information (generally speaking, information which the user wants to protect for any reason), this file is transformed into a self-protected file (because it will include instructions which add two levels of protection to the content of the file as it will be explained later).

This can be done when the file containing the information is created or afterwards. Of course, in order to assure the sensitive data protection, the file should be protected (i.e. the self-protected file should be created) before distribution to other users.

A file (called self-protected file) will be created including the sensitive data in a ciphered/encrypted format plus a part (called security part) which contains information to perform security actions (in an embodiment, said information may be executable instructions to perform the security actions, so we can say that the file is an executable file). In other words, the method proposed embeds the sensitive data in a file that further includes information for performing security actions to protect the file.

To create said file a specific tool or application can be provided to enable the user who wants to protect the information (called from now on file creator) to create the self-protected file. Said application may be installed into the computer (or phone or any type of electronic programmable device) where the file is created and/or integrated with the Operating System (a possible implementation of the tool could be part of the Operating System Distribution, but not necessarily).

The above mentioned security actions will take into account two aspects of security:
1) Users that have right credentials (digital certificates, passwords or any other similar information used to authenticate the user and to give access to the sensitive information) to access the information may be not trusted users, therefore the credentials are not a safe way to protect information (or at least not enough safe for important information) because any credential may be shared with (or stolen by) other dangerous users. Under this point of view, credentials provide a low protection, independently of the complexity of passwords or digital certificate. This first aspect of security involves a high protection level which for example guarantees that the user opening the file is the granted user (i.e., the user opening the file is not impersonating another user), that the user opening the file belongs to the organization which the sensitive information belongs to and other measures which improves the protection of the sensitive data. In order to do that, the user opening the file will be challenged with verifications (not limited to credentials, that as said before are not an enough safe way to protect the information) which assure (or try to assure) that the user opening the file belongs to the organization in which this information is shared (in other words, that the information has not been taken out of the organization), that the user opening the file is the user who has permission to open the file and generally speaking, that the information has not been shared with (or stolen by) a "dangerous" user. This set of verifications (called "challenges") may be customizable. In an exemplary embodiment, only if all the verifications are successfully verified (i.e. all the challenges have valid values), then the file with the sensitive information is opened and decrypted.
2) In the case that the challenges have been successfully verified, the user can access the sensitive information. Then a second aspect of security is activated in order to protect the file content (the sensitive information) from potential intentions of sharing said information (considering as before that a granted user is not a trusted user). In this second aspect of security, some execution system's functions (called sharing functions) which could be used by the user to share the information with others will be blocked, making impossible for the user opening the file to copy, print, to access to the disc in order to save a copy, capture the screen or generally speaking to share the information included in the file with other users by any means.

The file creator (the user who wants to protect the sensitive data) can select which challenges he wants to activate (that is, which challenges from the list of available changes he wants to be verified when opening the file). When the new self-protected file is created (including the sensitive data encrypted and the security instructions i.e. the security part) and said new self-protected file can be distributed. Any type of encryption or ciphering known methods can be used to encrypt or cipher the sensitive data. Regarding the encryption key, it may be included in the file or may optionally be located in a secure server. This would depend on the required security level. In order to increase the security level, in an exemplary embodiment, the encryption key should be complex enough to resist dictionary-based attacks and should not appear in clear inside the file, but it must be generated by running a specific algorithm.

Some "hacking" protections may additionally be taken into account. For example, in order to avoid any modification of the security part of the file, the file may be digitally signed.

Once the self-protected file is opened, the challenges are checked (in an exemplary embodiment, by executing the corresponding instructions included in the file) and if everything is ok (that is, the challenges have a valid value), the original file is decrypted, a copy of the file is created (usually in RAM to avoid the potential copy of a temporary file stored in the disk) and the needed editor/viewer of the type of file is invoked (for example for .doc, invoke word, for pdf, invoke reader...). Before the invocation of the viewer, some potential operating system "dangerous" sharing options (copy, paste,...) must be blocked (in an exemplary embodiment, by executing the corresponding instructions included in the file).

Of course, as the self-protected executable file may be distributed over a network to another user, said file may be opened in a second electronic device different from the electronic device where the file has been created (and usually this will be the case).

In an exemplary embodiment, the security part of the file includes executable instructions to perform the security actions executable by the electronic device opening the file. That is, executable instructions which makes the electronic device opening the file (when it runs said instructions) to verify the selected challenges, to decrypt and to store the decrypted data in a volatile memory if the verifications are successful and to block the "dangerous" sharing functions.

In a variant of this embodiment, the security part embedded in the file includes information identifying the selected challenges and an specific tool or application (e.g. program) which performs the security actions. In this case, the self-protected file runs by itself the selected challenges verification (indicated by the information included in the file), deciphering and storing the decrypted data in a volatile memory if the verifications are successful and the blocking of potential "dangerous" sharing functions like copy or cut, paste, print, save to disc, etc. In other words, in these two embodiments, it could be said that the file is an executable file or more specifically, "auto executable". Hence, the self-protected file could be distributed to almost any electronic device. Of course, on the other hand this will imply that the file would be "bigger" and more complex (more bandwidth and/or time to distribute the file through a communications network...).

In an alternative embodiment, the security part embedded in the file only includes information identifying the selected challenges. An specific application (e.g. a program), integrated or not into the Operating system, must be previously installed in the electronic device opening the self-protected file. Said application will be in charge of performing the security actions indicated above to protect the file, i.e.: verifying the challenges (indicated by the information included in the file), decrypting and storing a copy of the file if the verifications are successful and blocking the "dangerous" sharing functions. In this exemplary embodiment, if said specific application is not installed in the device opening the file, then the self-protected file cannot be opened.

In the embodiments proposed, that the verification is successful (or that the verification has been successfully verified) means that the verification has been performed and that the result of the verification is positive (that is, the verified values belong to the defined list of allowed values).

As explained before a dangerous user (an user which is not permitted to access the information or that the file creator does not want to access the information) may have the right credentials to access the file (because a granted user has shared said credentials with him or because he has stolen the credentials), so the credentials are not enough to assure the right level of protection. The available challenges offered to the file creator have to be carefully selected, in order to raise the protection level of the data avoiding that a "dangerous" user accesses the sensitive data. According to an embodiment of the invention, the list of challenges offered to the file creator, includes at least the following challenges.
1) Domain verification: User must be logged into a certain intranet (or internet) domain. This is done to try to assure that the user is an employee of the organization or a collaborator with access rights to the organization's network (logged to the organization intranet for example or to a particular domain). So there is a list of allowed domains and the verification will be successful if the user is logged to any of said domains.
2) Verification of electronic device's fingerprint. In this context, with the term "fingerprint", it is meant the hardware and software features of the electronic device. In other words, the hardware settings (e.g. type and model of electronic device) and the software installed in said electronic device (defined for example by the names, versions, sub-versions of the programs, libraries and/or patches installed into the device). Organizations usually deliver the same type of equipment (hardware settings and installed software packages versions and configurations) to all their employees. This challenge try to assure that the user is opening the file from an organization's equipment. There is a list of allowed electronic device fingerprints (type of electronic device, settings, configurations, programs installed) and the verification will be successful if the fingerprint of the electronic device opening the file is in the list, that is if, for example, the combination of type of electronic device, its settings, its configuration and the programs installed is included in the list.
3) Date and time verification: The data access is only allowed during a certain period of time. Said certain period of time may be defined by the file creator. When the user wants to open the file, it is checked if the date and time is within said certain period of time, and if not, the verification is not successful. To increase the protection, the date checking may be based into a date query to an external and trusted server, in order to avoid computer date manipulations.
4) Biometrical verification. A malicious user could steal a computer and try to access to the information. A biometrical recognition may protect against them. So when the user wants to open the file, some of the biometrical features of the user is checked (e.g. voice recognition, iris recognition, user's fingerprint recognition... or any other biometrical feature or a combination of some of them) and if any of the biometrical features checked does not correspond to the allowed biometrical features then the biometrical verification is not successful. Said biometrical recognition is made using any of the known existing systems for biometrical recognition. The biometrical recognition may involve external servers and/or different devices to perform the recognition (e.g. when user tries to open the file using a computer, the execution part of the file may invoke an external server, for example, to make a video-call to the user's mobile device and perform a face and voice recognition)
5) Geographical localization of the user verification. There is a list of allowed localizations (or zones) for the users accessing the information, then the users location is checked and if said location does not belong to the list of allowed locations (or zones), the verification is not successful. The geographical localization of the user is made using any of the known existing methods (based on its IP address, based on GPS location of the computer...)
6) Question/answer verification: User is asked some questions (usually defined by the file creator); the correct answers to each question may be also defined by the file creator. If the answer of the user opening the file is not correct, then this verification is not successful. This is made in order to know if the user knows specific information that only organization members or employees have.

There are well known credentials based verifications For example, credentials based in physical cards or identification devices, credentials based in digital certificates, credentials based in passwords, a single-use secret key or "one-time Password" delivered by the organization to the user whenever the user wants to open the document (this secret key must be delivered using a different terminal than computer as a mobile phone or a password generator delivered to the user by the organization). As explained before, said credentials offer low protection because the user having the credentials could potentially share the credentials with other users. So said credentials checking alone do not provide the required level of protection; but together with some of the other verifications described above, can be useful to increase the level of protection, so they can be added to the list of available challenges.

Added to the above list of challenges other challenges can be included in order to increase the level of security. For example, a "number of accesses" verification could be included where the access to the data is only allowed a limited number of times (usually defined by the file creator). That is, when the user wants to open the file, it is checked how many times has opened the file and if said number is above a certain threshold, the file is not opened.

All the above stated verification may be validated in an online server. That is, the electronic device where the file is opened may be forced to be connected with a specific server in order to validate any of the above stated verifications instead of validating them in the electronic device where the file is being opened. This is an optional feature and can be also defined by the file creator (i.e. the file creator may define if the validation of the challenges is made in the electronic device where the file is being opened or in an specific remote server).

Optionally, the remote server can execute some other tests and if the result of the test is negative, them the file cannot be opened.

From said list of challenges which are offered to the file creator, he will decide to activate all or part of them. That is, he will decide which of those challenges will be activated and therefore, will be checked when an user try to open the self-protected file. The file creator's decision will depend on several factors as for example, the specific scenario, the type of sensitive information, the type of network used to transmit the file..... For example, if the file creator wants that the file could be opened by a colleague who is out of the office without access to his corporate PC or laptop, the file creator should not activate the challenge of the "validation of computers fingerprint". The set of challenges activated by the file creator may be very strong or softer, depending on said factors

This allows a great flexibility of the proposed embodiments, allowing the protection to be adapted to the actual scenario and conditions.

The file creator may also input in the file the list of valid values for each challenge (that is, the list of allowed domains, the list of allowed computers, the allowed period of time to access the information...) or to activate an option to force the user to connect to an online server where the valid values are stored.

In an embodiment, the file creator may include one or more customized own challenges. A customized own challenge is a list of executable instructions, included in the self-protected file, added by the file creator at the moment of the file creation, to define a further challenge. That is, the file creator not only can select from the list of available challenges which challenges he wants to activate but also the file creator can create and add a piece of executable code embedded in the file to define his own challenges to be validated.

In an embodiment, not all the information of the file of the file is equally "sensitive", so there is a part of the information more important (and consequently more protected) and other parts less important (and consequently less protected). Therefore, there may be some challenges whose successful verification allow access to the whole information contained in the file and other challenges whose successful verification allow access to only part of the information of the file (or to the whole information but with less quality). Or from other point of view, there may be challenges which, if they are not successfully verified, none of the information can be accessed ("strict challenge") and other challenges ("less strict challenges") which, if they are not successfully verified, part of the information cannot be accessed but certain parts of the information can be accessed.

For example, the file creator can define the biometrical validation as a "strict challenge" so if the biometrical validation is not successful, none of the information can be accessed. However, he can define that certain part of the information can be accessed even if the computer fingerprint validation is not successful. In this case the biometrical validation is an strict challenge and the computer fingerprint validation is a less strict challenge.

In the case that the challenges have been successfully validated, the user can access the sensitive information included in the file. Then the second aspect of security is activated in order to protect the file content from potential intentions of copy.

Each type of document has a default viewer. If the list of active challenges is passed successfully, the document embedded in the self-protected file is decrypted and opened in volatile memory (e.g. a RAM memory) and then, just before the invocation of its default viewer, some functions are blocked, in order to prevent information being shared by the user accessing the file. If possible, said functions may be only blocked for the self-protected file. However in most of the existing systems, it is not possible to block said functions only for an specific file, but the functions are blocked for all the files that are opened. In this latter case, the functions will be blocked for all the files being opened at the same time. Some of said functions are:
- **Block Copy&paste** (and cut&paste) to prevent all or part of the information being copied into a new document
- **Block access to storage devices** (like hard discs, pen drives...) to the viewer, in order to prevent the possibility of saving a copy in any storage system or device (usually viewers and editors shows a "save as" functionality to create a new file, but the access to any storage device must be blocked, avoiding to save a new file). Alternatively or additionally, the "save as" functionality could be blocked.
- **Block access to Printer** (to any printer device or file)
- **Block screen capture** functionality (in some Operating systems it is possible to capture the screen into a temporary memory area by pressing some keys combination)

Additionally, the possibility to finalize a process could be also blocked. This is done through Operating System task manager tool, in order to prevent the possibility to kill the process in charge of achieve these blockings.

In an embodiment, all the above stated functions are blocked when the file with the sensitive information is opened and decrypted. After closing the self-protected file, all of these functions may be enabled again.

In an alternative embodiment, said functions are not always blocked but from said list of functions the file creator will decide which functions will be blocked when the file with the sensitive information is opened and decrypted. For safety reasons, in a preferred embodiment the blocking of all the functions of the list is always done (that is, said functions are always blocked not having the file creator the possibility of selecting for blocking only some of them).

In an exemplary embodiment, the method for data leak protection of certain electronic data which a user (called file creator) wants to protect (sensitive data) (11), comprises the following steps (see figure 1):
a) Selecting the security challenges (verifications) to be verified when opening the file, from a list of possible challenges to be verified (12). At stated before, in an embodiment, said list of possible challenges will include at least: the domain where the user opening the file is logged, the computer fingerprint, biometrical features of the users opening the file, the date and time when the file is opened, the location of the computer opening the file, to define some questions that the user opening the file must answer correctly.
b) Encrypting the certain electronic data to be protected.
c) Generating a new self protected file (13) including the encrypted data (15) and information about the security actions to perform (14) (e.g. identification of the challenges selected, list of allowed values for each challenge...). As explained before, in this security part (14) specific instructions could be included to validate the selected challenges and if the selected challenges validation is successful, to open the file in a volatile memory and to decrypt the file as well as instructions to block some functions ("sharing" functions) in the computer opening the file, said functions to be blocked will include at least: Copy&Paste functions, saving the file in storage devices, screen capture and access to printer.

When opening the self protected file the security actions will be performed, that is, when opening the self protected file, the following actions will be performed:
d) Verifying the selected challenges one by one.
e) If the verification of any of the challenges is not successfully verified (16) (that is, the value of any of the challenge does not belong to the list of allowed values), the process ends and the file is not opened. Optionally, if any of the challenges is not successfully validated, an alarm of "not allowed access" can be activated in the computer or sent to a security server to inform about the not allowed access.
f) If all the challenges are successfully verified (17), decrypting the data (18) and opening it in a volatile memory (19), for example a RAM memory
g) Blocking the "sharing" functions (20).

The selection in step a) may be performed by the file creator.

As explained before, a program which enables the electronic device opening the file to perform the security actions (in order to perform steps d), e), f) and g)) could be embedded in the file or the information about the security actions is created in an specific format to be read and executed by a program included in the computer opening the file.

After step g), the editor or viewer necessary to read, view and/or listen the sensitive data may be invoked.

In an embodiment all the challenges are always selected, not having the file creator the possibility of selecting only some of them.

In an alternative embodiment, not all the challenges are equally important and part of the sensitive data can be accessed even if some of the challenges are not successfully validated. In order to do that, the following actions are added to the above disclosed steps:
a) *Defining for each selected challenge which part of the sensitive datawill not be accessible if said challenge is not successfully validated.*
*b) as stated above*
c) Including in the file for each challenge, information about which parts of the *sensitive data will not be accessible if said challenge is not successfully validated.*
d) As stated above.
e) is replaced by: if any of the selected verifications is not successful (that is, the value of any of the verified challenges does not belong to the list of allowed values), obtaining for each not successful verification which part of the *sensitive data*will be defined as not accessible, extracting from the file the parts of the data which has not been defined as not accessible, if any, decrypting said parts and storing them in a volatile memory where the second user can access the decrypted data.
f) and g) As stated above.

For example, there could be some very important challenges, which forbid the access to the whole data if they are not successfully validated. In an embodiment, all the challenges will be defined as very important and therefore, if any of them is not successfully validated, the file could not be opened at all.

In all the above embodiments, "file creator" is meant the user creating the self protected filed which can be for example the user who has created a source file with sensitive data or the user which wants to protect the information included in an already existing source file.

With the term "organization" it is meant not only any private or public corporate firm of any size or any government institution but also any private person which wants to protect information, he is going to distribute.

With the term "electronic device", in the above embodiments it is meant a computer, a PC, laptop, tablet, smart-TV, phone or generally speaking any electronic device.

Summarizing, the above stated embodiments propose a data protection method, easy to implement and which is especially efficient in scenarios where the users with granted access to the information are not trusted users and therefore they may produce data leaks.

The presented embodiments potentially have the following advantages when compared with the prior art:
- Assure a high security protection even in the case that the file and the credentials (password, digital certificates...) reach the wrong hands.
- Most of the solutions disclosed in the prior art are client-server based solution which must be integrated into company infrastructure. The solution proposed does not need any client-server infrastructure or any external network communication as they may be supported only by the protected file itself. It allows therefore to be implemented by small companies or non-corporative users without any installation or amendments in the IT infrastructure.
- Easy to implement and to use.
- It allows an user to personalize and customize the privacy policies, defining them and specifying how and under what conditions the data should be extracted.

A person skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for protection of electronic data, the method comprising the following steps:
a) A first user of a first electronic device selecting verifications to be performed from a list of available verifications
b) Encrypting the electronic data in the first electronic device.
c) Creating a file in said first electronic device, embedding said encrypted data in said file and including information identifying the verifications selected in said file.
d) Opening the file in a second electronic device by a second user.
e) In the second electronic device, extracting from the file, information identifying the verifications selected and performing the selected verifications one by one
f) If all the selected verifications are successful, extracting from the file the encrypted data, decrypting the data and storing it in a volatile memory.
g) Blocking in the second electronic device certain functions applicable to the decrypted data, at least until the file is closed.

2. A method according to claim 1 where the functions applicable to the decrypted data, blocked while the file is opened are at least the following functions: the Copy&Paste function, the saving the file in storage devices function, the screen capture function and the print function.

3. A method according to any or the previous claims where the list of available verifications to be performed includes at least the following verifications: verifying that the user opening the file is logged in a domain which belongs to a list of allowed domains, verifying that the second electronic device hardware and the software installed in said electronic device belongs to a list of allowed hardware and software, verifying that biometrical features of the user opening the file belong to a list of allowed biometrical features, verifying that the date and time when the file is opened is within a certain allowed period for accessing the file, verifying that the location of the second electronic device belongs to a list of allowed locations, verifying that the answers to some questions are correct according to a list of correct answers

4. A method according to claim 3, where in step c), information defining the lists of allowed values for each selected verification, is further included in the file.

5. A method according to any or the previous claims, where step a) further comprises: defining for each selected verification which part of the electronic data will not be accessible if said verification is not successfully verified,
step c) further comprises: including in said file for each selected verification which part of the electronic data will not be accessible if said verification is not successfully verified
and step f) further comprises: if any of the selected verifications is not successful, obtaining for each not successful verification which part of the certain electronic data will be defined as not accessible, extracting from the file the parts of the encrypted data which has not been defined as not accessible, decrypting said parts and storing them in a volatile memory.

6. A method according to any of the claims 1-4 further including in step f): if any of the selected verifications is not successful, closing the file and finalizing the method.

7. A method according to any or the previous claims where step c) further comprises: including in the file an ID of a third electronic device where the second electronic device has to connect to verify if some of the selected verifications are valid, and step e) further comprises: connecting to said third electronic device to perform the selected verifications.

8. A method according to any or the previous claims where the volatile memory is a RAM memory.

9. A method according to any of the previous claims, where the steps e), f) and g) are performed by the second electronic device by executing an executable code, previously obtained.

10. A method according to claim 9, where step c) further comprises: embedding the executable code in the file and step d) further comprises: extracting said executable code from the file by the second electronic device.

11. Electronic device for protecting electronic data, the electronic device comprising:
a) Means for selecting by a first user of the electronic device, verifications to be performed from a list of possible verifications.
b) Means for encrypting the electronic data
c) Means for creating a file in said first electronic device containing said encrypted data and including in said file information identifying the verifications selected

12. Electronic device according to claim 11, further comprising means for including in said file, executable instructions which, when executed by a second electronic device, makes the second electronic device to extract from the file information identifying selected verifications to be performed, to perform the verifications selected and if all the selected verifications are successful, extracting from the file the encrypted data, decrypting the data and storing it in a volatile memory and to block some functions applicable to the electronic data while the file is opened.

13. Electronic device for accessing electronic data contained in a file, the electronic device comprising:
- Means for extracting from the file information identifying selected verifications to be performed
- Means for performing the selected verifications one by one.
- Means for, if all the selected verifications are successful, extracting from the file the encrypted data, decrypting the data and storing it in a volatile memory where an user of the electronic device can access the decrypted data.
- Means for blocking in the second electronic device certain functions while the file is opened.

14. A computer program product comprising instructions causing a computer executing the program, to perform all steps of a method according to any of claims 1-10.

15. A digital data storage medium storing the computer program of claims 14.
